# EUROPEAN PATENT SPECIFICATION

(11) **EP 2 300 574 B1**
(45) Date of publication and mention of the grant of the patent: **04.09.2013**
(21) Application number: 09762736.8
(22) Date of filing: 10.06.2009
(51) Int. Cl.: C10L 5/44, C10B 53/02, C10L 9/08, F26B 3/18

(54) **METHOD AND APPARATUS FOR THE MANUFACTURE OF TORREFIED LIGNOCELLULOSIC MATERIAL**
VERFAHREN UND VORRICHTUNG ZUR HERSTELLUNG VON GERÖSTETEM LIGNOCELLULOSEHALTIGEM MATERIAL
PROCÉDÉ ET APPAREIL DE PRODUCTION D'UNE MATIÈRE LIGNOCELLULOSIQUE TORRÉFIÉE

(30) Priority: 11.06.2008 SE 0801365
(43) Date of publication of application: 30.03.2011
(73) Proprietor: BioEndev AB, 901 05 Umeå (SE)
(72) Inventor: LUNDGEN, Göran, S-905 80 Umea (SE); NORDIN, Anders, S-907 52 Umea (SE); OLOFSSON, Ingemar, SE-90580 Umea (SE)
(74) Representative: Wirén, Anders
(86) International application number: PCT/SE2009/000294
(87) International publication number: WO 2009/151367

(56) References cited:
- WO-A1-89/05847
- WO-A1-2007/078199
- WO-A1-2007/078199
- US-A- 4 787 917
- US-A1- 2008 022 595
- JAMES R ARCATE: "Global markets and technologies for torrefied wood in 2002", WOOD ENERGY, ITEBE, LONS-LE-SAUNIER, FR, 1 July 2002 (2002-07-01), pages 26-28, XP002292486, ISSN: 1811-2722
- LIPINSKY E S ET AL: "Enhanced wood fuels via torrefaction", FUEL CHEMISTRY DIVISION PREPRINTS, XX, XX, vol. 47, no. 1, 1 January 2002 (2002-01-01), pages 1-3, XP002398457,
- JAMES R. ARCATE: 'Global Markets and Technologies for Torrefied Wood in 2002' TRANSNATIONAL TECHNOLOGY LLC, USA, WOOD ENERGY, [Online] July 2002, pages 26 - 28, XP002292486 Retrieved from the Internet: <URL:http://www.itebe.org/telechargement/re vue/Revue6/Revue6-EN.pdf>

## Description

### Technical field

The present invention relates to a certain technique for treating lignocellulosic material or in other words biomass. The technique is normally called torrefication. Other names of the technique is gasification and retification. The technique as such amounts to strong heating of a preferably completely dry material without deliberate presence of oxygen. Upon heating of the material it looses weight, since certain parts of the organic material is transferred into a gaseous state, which is normally denoted reactor gas. How much weight the material looses, which is the same thing as how much reactor gas that is formed, depends on the degree of heating of the material, i.e. how much energy that is supplied to the material. The treatment temperature depends on the desired end product. Normally the treatment temperature lies within the interval 200-320 °C and a suitable treatment temperature is regarded by many to be within the interval 270-300°C. The weight reduction may lie within the interval 20-30 %.

Despite this weight loss, which is not positive in itself, the torrefied material has several advantages, of which some are very important, compared with the starting material. A natural advantage is that the calorific value, i.e. the energy density, is higher in the torrefied material. The great advantage with torrefied material is that it is easily processible/easily handled. The material can be used for many purposes. One example is that the material can be used as fuel in different connections. Another example is that the material can be gasified in special reactors wherein the valuable gases carbon monoxide and hydrogen are formed. From these chemicals several vehicle fuels can be manufactured, using catalytic technique, such as methanol, ethanol, diesel (synthetic) and so on. Of course it is also possible to produce a number of other valuable chemicals from these gases, which chemicals today are manufactured from the finite raw materials natural oil and natural gas. The most important example of that the material is easily processible may be that it is comparatively easy to grind it into particles, for example spheres or grains, of a uniform size. In principle, it is not possible to produce such particles from a non-torrefied lignocellulosic material of varying extension. One further, very important property of torrefied material is its insensitivity to moisture, i.e. water. Torrefied material has a natural moisture content of 2-3 % and it is almost impossible to change this moisture content irrespectively of how the material is handled, i.e. the material is in principle inert vis-à-vis water. The material is accordingly not affected by weather and wind, storage conditions etc.

Any known biomass and any known lignocellulosic material can be used as starting material. Such materials may come from the forest or agriculture or any other field wherein biomass is produced or exists. A relatively cheap material, which is good enough as starting material is so called grot, i.e. branches and tips from trees. Also needles from trees can be used, provided that they have been gathered in large amounts. There is not a very high demand of this raw material in other fields of activity. There are a large number of recovery fields for products, having biomass as a base, which products can be used as starting materials. It is characterizing for the torrefication technique, that an extremely poor material (a judgment made by other actors on the biomass market) can be supplied in one end of the manufacturing process while a high quality product is obtained at the other end.

### Technical standpoint

To our knowledge there is no full scale commercial plant for the manufacture of torrefied lignocellulosic material running today, at least not within the boarders of Europe.

Pilot plants for torrefication of lignocellulosic materials have existed and possibly still exist. Further, propositions have been presented in the literature for methods and apparatuses for torrefication of biomass.

In the Swedish Patent Specification 500 058 (9100998-5) and the corresponding international patent application WO 92/17744 is described a method for retification (=torrefication) of biomaterial. The abstract of the Swedish Patent 500 058 reads as follows:
*"Method for heat treatment of biomaterial, for example wood-chips, timber and the like in a plant including a treatment chamber, which forms a close system with an external circulation conduit connected to the opposite ends thereof via an inlet and an outlet, wherein the biomaterial is introduced in and after treatment is removed from the treatment chamber through at least one opening with sluice, which prevents air penetration into the system, and wherein the system during operation is kept substantially filled with steam close to atmospheric pressure, which steam is brought to circulate in the system through the circulation conduit and the treatment chamber, and wherein that part of the steam that corresponds to the moisture expelled from the biomaterial is drained and condensed, wherein the steam through indirect heat transfer from a heat carrier at the inlet into the treatment chamber is kept at a temperature of at least 260 °C, that is somewhat above the desired treatment temperature, and wherein gases exhausted from the material are collected and burnt for heating of the heat carrier."*

The characteristic feature of this torrefication or heat treatment method is that the drying of the biomaterial as well as the torrefication of the same is performed in one and the same step. A completely dry starting material cannot be torreficated according to this method, since one is dependent of the water naturally contained by the starting material for the formation of the treatment or heating medium, i.e. superheated steam. A drawback with torrefication of biomass in this way is that generated organic gases in large amounts are mixed with the steam and these gases has to be separated afterwards, which is done in a condensation step, in which the steam is transferred into dirty condensate water and non condensable gases of organic origin are transferred to a boiler for combustion. Another drawback with this patented method is that the problem of cooling the torreficated material in a good way is not solved. In the patent specification cooling by sprinkling water over the material is recommended.

In the international patent application WO 03/014644 is described a method and apparatus for heat treatment of organic material. In the abstract the following is stated:
*"A method of processing organic material comprises heating the organic material to a temperature exceeding 100°C in an atmosphere comprising at least one of superheated steam, a hot inert gas, hot air and hot process gases and subsequently cooling the heated organic material in an atmosphere comprising at least one of superheated steam and an inert gas. Also described are processing apparatuses for use in performing the method.*"

In the corresponding European Patent Application 1 415 119 the method has been limited and method main claim has the following wording:
*"A method of processing organic material comprising locating the organic materialwithin a processing enclosure (2) heating the organic material to a temperature exceeding 100°C in an atmosphere comprising at least one of superheated steam, a hot inert gas, and hot process gases, by re-circulating the said at least one of superheated steam, a hot inert gas, and hot process gases through a recirculation path, heater means (7) being provided to heat the gases passing along the recirculation path, valve means being provided to allow the replacement or substitution of gases and venting means being provided to allow the venting ofgases, characterized in that the heater means comprises indirect heater means, and by cooling means also being provided for the subsequent cooling of the heated organic material's solid residues in an atmosphere comprising at least one of superheated steam and an inert gas. "*

It should be noted that regarding the cooling of the treated material, this is not done indirectly but directly and more specifically with the aid of superheated steam or an inert gas, which flows around the particles of the material.

The patent application presents an obvious weakness, which consists in that there is no information of neither suitable nor actual treatment temperatures. Again and again is repeated that the material should be heated to a temperature above 100°C, but a specification in addition to this information is not disclosed. In the claims it is compulsory to cool the treated material. If a treatment temperature of 105°C (which by definition exceeds 100°C) is chosen, no cooling step should be needed, since at this temperature there is no risk for self-ignition of the treated material. Even worse is the lack of information of maximum temperature in the treatment. At very high treatment temperatures the organic starting material will be destroyed at least to a large extent.

In the third international patent application WO 2005/056 723 a further method and a system for torrefication of raw materials are described. The method main claim in this patent application has the following wording:
*"Method for the production of solids from raw materials using torrefaction, wherein;*
   *a) raw material is subjected to an elevated temperature in a reactor in an atmosphere that has a low oxygen content or contains no oxygen, in that*
   *b) the raw material is brought into heat-exchanging contact with a gaseous medium at a temperature higher than the torrefaction temperature of the raw material, solid fuel and reaction gas being produced,*
   *c) wherein at least part of the reaction gas is fed to a condensation chamber in which said reaction gas is at least partially cooled such that at least some of the condensable components in the torrefaction gas condense and are discharged from said condensation chamber separately from the non-condensed torrefaction gases and at least part of the condensate obtained is combusted by adding gas containing oxygen, characterized in that said treatment at elevated temperature comprises a torrefaction treatment at 200°C-320°C, the reaction gas comprises torrefaction gas and said raw material is fed continuously to said reactor and product is discharged continuously therefrom."*

In this method it is decisive that formed organic gases, also denoted as reactor gas, formed during the torrefication of the dry material, are exhausted from the torrefication chamber and is transferred to a condenser, wherein at least part of this gas is brought to condense for the formation of an organic condensate rich in energy. This condensate is used as the main energy source and is brought to a combustion oven wherein a very hot and accordingly energy rich flue gas is formed. The energy in this flue gas is used to carry on the whole process for the production of torreficated material. Even if it is possible to use additional fuel, which is brought to said combustion oven, the strive is to use said organic condensate as the sole energy source.

Despite the fact that in the above method main claim nothing is said about cooling of the torreficated material, all embodiments of the invention, which are shown in the figures of the patent application, a cooling step is included. There is not one special cooling technique, but different techniques can be used. If the torreficated material is not cooled but instead it is allowed to come into direct contact with atmospheric air, at for example room temperature, the content of oxygen in the air will lead to that the material will start to burn, which normally is called self-ignition.

WO 2007/078199 discloses a method and apparatus for torrefication of lignocellulosic material a drying chamber, a torrefying chamber and a coding chamber.

### Description of the invention

### Technical problem

As is evident from the above, different proposals for the manufacture of torreficated material from raw materials in the form of biomass and lignocellulosic material have been presented, e.g. in the patent literature. Despite this there is a need of alternative production methods for torreficated materials. Especially there is a need of a manufacturing method which works in practice and which is cost effective. The method and the apparatus have to be adapted to the fact that the raw material can vary from one time to another both regarding for example type of raw material and water content, that is moisture content, in one and the same material.

### The solution

The present invention solves these problems and is related to a method for the manufacture of torreficated lignocellulosic material, comprising that disintegrated lignocellulosic material with the aid of a compressing and air repressing feeding means is brought to a gas tight, jacketed, drying means, wherein at least the main part of the water contained in the lignocellulosic material is driven away and removed from the means in steam form, caused by the fact that the temperature inside the drying means is at least 100°C, and in that the lignocellulosic material after drying, that is removal of the water, under gastight conditions is fed into one at least substantially oxygen free, jacketed torrefication chamber, wherein the lignocellulosic material under the influence of a temperature within the interval of 200-320 °C, suitably 270-300 °C, is transformed into torreficated lignocellulosic material under simultaneous escape of combustible, organic gases, whereupon the torreficated lignocellulosic material at about treatment temperature and in the absence of intruding gases is brought to a cooling means, wherein the temperature of the torreficated lignocellulosic material is reduced at least 100 °C, suitably at least 150°C, whereupon the torreficated lignocellulosic material is fed out from the cooling means to be collected at atmospheric pressure and surrounding temperature, possibly after a further cooling, and comprising that escaped, combustible organic gases are brought from inside the jacketed torrefication chamber to an oven, wherein they are combusted under the generation of energy rich flue gases, characterized in that, as an external energy carrier for the method is used steam at overpressure, which is introduced into the jacket of the torrefication chamber at a temperature exceeding the torrefication temperature and is brought to pass through the jacket to leave the jacketed torrefication chamber at a temperature below the torrefication temperature for further transport into the jacket of the drying means and passage through that jacket to emit necessary energy for removal of water from newly added lignocellulosic material, leading to that this medium will leave the jacket of the drying means intact as steam at comparatively low temperature or leaves the jacket in condensed form, that is as water, with a temperature at or somewhat below 100 °C, which is collected.

As is evident from above the manufacturing process for torreficated material, which later is exposed to for example grinding, so that the material is converted to a fine-grained powder, comprises three process steps; at first a drying step and thereafter the torrefication step itself and finally a cooling step. All these treatment steps will be described more in detail later on in this publication.

The energy output place, that is from where the heating steam at overpressure is fetched, can be of different character. Preferably, it is localized somewhere along a steam turbine, which generates electrical current, and belonging to a power/heating plant. Another alternative is a steam boiler. There are different types of steam boilers. A steam boiler fired with bio fuel is preferred. In the last resort an electrical boiler can be tolerated, especially if it is driven with green electricity.

The steam at overpressure may already at the output place have the temperature which is necessary for the indirect heating of lignocellulosic material inside the torrefication chamber, which steam temperature exceeds 200 °C and is below 340 °C, suitably exceeds 280°C and is below 320 °C. The tapped off steam does not necessarily need to have a temperature as high as said above, but instead the tapped off steam can be heated on the way to the torrefication chamber, so that the above disclosed high temperatures are reached. The temperature increase can take place through indirect heat exchange wherein the energy emitting medium is comprised of flue gases from the combustion oven. The energy content of the flue gases is so high that the above described tapping off of energy is only a fraction of the total energy content. Therefore the flue gases are fed further on to a heat exchanger, through which circulating hot water, such as district heating water, is flowing in a large amount. The heat exchange takes place indirectly. When the flue gases have emitted substantially all the energy content, they are fed into the surroundings through a funnel. It is not necessary to lead the whole flue gas stream through the above mentioned first heat exchanger, wherein the heat absorbing medium is comprised of steam at overpressure, but instead it is even suitable to divide the flue gas stream into the two parts, whereof one part is fed around said heat exchanger.

In the case, wherein the tapped off steam at overpressure already from the beginning has a high enough temperature, the total energy content of the flue gases are used for indirect heat exchanging with said circulating hot water, such as district heating water. Thereafter, the flue gases are led out into the surroundings through a funnel.

The path for said overpressure steam through first the torrefication step and then through the drying step has been described above. This described path does not have to be followed strictly, but instead it is quite possible to divide the steam leaving the torrefication chamber and heading for the drying means into two flows, one of which is fed to the drying means while the other is fed to a heat exchanger, wherein energy is transferred indirectly to the circulating hot water, for example district heating water, which steam flow during/after emitting energy is condensed to condensate water, which is recovered.

Concerning the drying step it is preferable to keep the temperature as low as possible, provided that the water is driven out of the lignocellulosic material as water vapor, that is the drying should be performed at 100°C or some degrees above, in order to minimize the escape of organic gases from the lignocellulosic material, at the same time as the water is driven out as vapor. Even if the escape of organic gases at said low temperature interval is small, it is actually there and regard must be taken to that. The escaped water vapor with a small content of organic vapors is fed to a condenser, wherein the cooling medium is comprised of circulating hot water, such as district heating water, for the formation of condensate water at a temperature somewhat above the temperature of the circulating hot water, which condensate water is fed to a collection point. Said organic gases hardly condense at all together with the water vapor and therefore these gases are withdrawn from the condenser and are mixed with atmospheric air, which mixture with a principle content of air is fed to the oven after indirect heat exchange in order to serve as combustion air.

The conclusive cooling of the torreficated material can be performed in many different ways. One way is to let the material pass through a device of the type jacketed cooling screw with compression, where a cooling medium is transported in the opposite direction in due of the running and increasingly compressed torreficated lignocellulosic material through an outer jacket and/or through an inner jacket in the center of the cooling screw. At the inlet and in the beginning of the cooling screw the torreficated material is to a certain degree surrounded by reactor gas, but as the degree of compression is increased the reactor gas is displaced towards the inlet and in the end of the screw all reactor gas has been displaced and simultaneously the compressed material serves as a gas barrier against the surroundings. Said plug of torreficated material is fed out in any known way from the cooling screw and is collected in for example a collecting container. When the torreficated material leaves said cooling step or any other cooling step, its temperature should lie underneath 130°C. This is so in order to prevent a selfignition of the material. Any known refrigerant can be used for performing the above described cooling work comprising gases as well as liquids. Suitably a heat resistant oil is used. When the cooling medium after the cooling work leaves the cooling screw, it is conducted to a heat exchanger wherein the energy taken up by the cooling medium indirectly is transferred to the above mentioned combustion air, which is supplied to the oven, whereupon the cooling medium at its starting temperature is returned to the cooling screw at the end, where the cooled torreficated lignocellulosic material is exhausted.

No further cooling of the torreficated material is necessary, but instead the ready treated, collected material with a temperature below 130 °C can be left to adapt to the surrounding temperature, for example room temperature. However, the collected material has a considerable energy content, since its temperature can exceed 100°C and even be as high as 130°C and therefore it is preferred to make use of part of this energy.

For example the relatively warm torreficated material can be passed through a heat exchanger, wherein energy indirectly is transferred to atmospheric air, which heated air is mixed into the combustion air, that is, is supplied to the oven. A temperature of the torreficated material can be lowered down to underneath 50°C with this extra cooling step.

The present invention also relates to an apparatus for production of torreficated lignocellulosic material, comprising a compressing and air displacing device, with the aid of which finely divided lignocellulosic material is supplied to a gastight jacketed drying device, through which jacket heating steam is flowing countercurrent to the lignocellulosic material and having an exhaust conduit applied inside the cooling device through which gases driven away from the lignocellulosic material, especially steam, flow, followed by, in the transport direction in the lignocellulosic material, a jacketed torrefication chamber, which is gastight at least vis-à-vis the drying means, which chamber on one hand has an inlet conduit arranged at the jacket for external, heating steam at overpressure and an outlet conduit arranged at the jacket for heating steam at reduced overpressure, the end of which is arranged in the jacket of the drying means, and on the other hand a conduit arranged inside the chamber, through which organic gases driven out of the lignocellulosic material, that is reactor gas, flows and the opposite end of said conduit is arranged in or adjacent to a combustion oven provided with a conduit for combustion air, followed by, in the transport direction of the lignocellulosic material, a cooling device, which is openly or gastight connected to the torrefication chamber, from which cooling means the torreficated and cooled lignocellulosic material is fed out to atmospheric pressure and surrounding temperature, characterized in that the inlet conduit for the external heating steam at overpressure in the opposite end is connected to a energy collecting device and in that at the end of the system for the heating steam, that is in the jacket of the drying device, at the end of the drying device where newly added lignocellulosic material is supplied, a conduit is arranged through which flows either steam substantially without any overpressure or condensed steam in the form of condensate water.

Above are those parts of the apparatus, which are absolutely necessary for performing the invention, disclosed. In order to optimize the invention from an environmental point of view as well as from a cost efficiency aspect the apparatus should be supplemented with the following.

The outlet conduit running from the drying device and containing gases driven out during the drying, especially steam, shall be connected to a condenser, wherefrom, besides inlet and outlet conduit for cooling medium for the condenser, runs two conduits, one main conduit for transport of condensate water to a collecting container, and a side conduit through which not condensed organic gases flow and are transported to a combustion air inlet device. From said device runs a conduit which is connected to the combustion oven, which conduit on the way passes through a heat exchanger wherein heat is absorbed by the combustion air and the heat is indirectly emitted by the heated cooling medium, which is led in a circuit through this heat exchanger and the cooling device.

Further, a flue gas conduit runs from the combustion oven to a funnel. On the way the flue gas conduit passes a heat exchanger, wherein all of the useful energy of the flue gas indirectly is transferred to circulating hot water, for example district heating water. In order to obtain torreficated material as the end product, which is aimed at, it is, as has been explained above, necessary that the material looses weight or, expressed in other words, that the material is degraded to some extent leading to that combustible, energy rich organic gases are evaporated. By combustion of these gases the energy content of these gases are utilized, resulting in an increase for example of the temperature and value of the district heating water.

The vapor conduit leading from the jacketed torrefication chamber to the jacketed drying device can be provided with a branch conduit, which passes through a heat exchanger wherein the energy content of the steam indirectly is transferred to circulating hot water, for example district heating water, the end of which branch conduit is connected to the exhaust conduit from the jacketed drying device. The above is a solution of the problem that the moisture content of the lignocellulosic material may vary from one time to another. If material at a certain operation time is received with a dry content of for example 60 % and at another operation time of for example 40 % much less drying energy is needed in the first case compared to the second case. The drying energy is regulated with the amount of heating steam which is added to the drying device. If a small amount of heating steam is necessary for the drying of a larger part of the heating steam, which leaves the torrefication chamber, can be fed through the branch conduit and be used for the benefit of the heating of the district heating water. This described problem is not at hand if newly supplied lignocellulosic material all the time has one and the same dry content, but the reality almost never looks like that.

The question if one or several, for example two, cooling devices are to be used for the torreficated material is decided firstly by the cooling capacity of the first device. In case two cooling devices are used the second can be a heat exchanger wherein the cooling medium is atmospheric air, which indirectly takes up heat from the torreficated lignocellulosic material that is cooled in one step, which heated air flows through a conduit, which is connected to the above-mentioned combustion air conduit.

### Advantages

By combining the manufacture of torreficated lignocellulosic material, which is a product demanded by the market, with for example a district heating system, according to the invention, a very cost effective manufacture of such a material is achieved.

According to preferred embodiments of the invention, every chance to recover energy and also to minimize the energy consumption are taken. This is accentuated in the case wherein steam at overpressure is taken from the turbine in a power/heating plant.

Further, both the method and the apparatus according to the invention are independent of the type of raw material used and also of variation in quality, for example a moisture content varying from one time to another, in one and the same raw material.

Also from an environmental aspect the method for the manufacture of torreficated lignocellulosic material according to the invention is high-class. For example, the drying step is optimally environmentally adapted, since on one hand the organic gases formed during the drying of the lignocellulosic material are taken care of and are supplied to the combustion oven together with the combustion air and on the other hand in that the moderately polluted condensate water is collected. There are many drying apparatuses for lignocellulosic materials on the market today, which are environmentally problematic in a varying degree. This depends in principle not on the drying apparatus as such, but on the method of installation and how the drying apparatus is used. Besides the above mentioned, moderately polluted condensate water coming from the drying process (and which is taken care of) the only possible environmentally disturbing exhausts are the used flue gases, which are let out through the funnel.

Since the heating steam does not come into contact with the polluted lignocellulosic material neither in the torrefication chamber nor in the drying device and does not come into contact with the polluted reactor gas either, the condensate water formed in the end from this steam is completely clean and can be reused. Further, the heat exchangers being part of the formation of apparatuses according to the invention are used in an environmentally unobjectional way.

### Description of figure

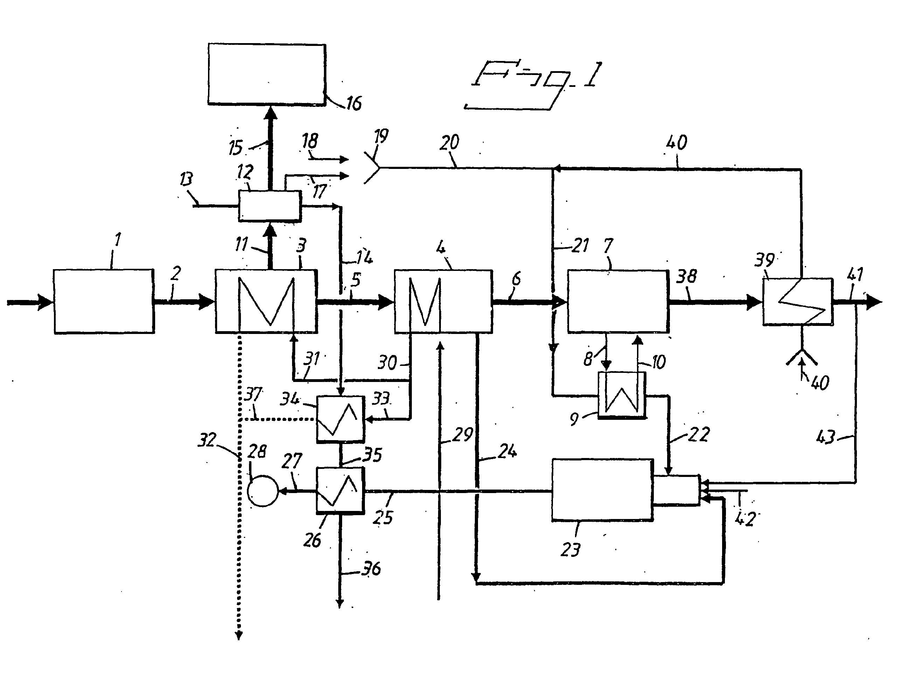

In figure 1 is shown a flow chart for a preferred embodiment of the invention.

### Best embodiment

Below a preferred embodiment of the method according to the invention is described with reference to the flow chart according to fig. 1. With reference thereto is described more in detail certain partial stages of the method. Further, certain parts of the apparatus are commented in detail.

The lignocellulosic material may already be finally divided when it reaches the torrefication plant. This is for example the case if needles from trees are used as starting material. Further it is becoming common that for example branches and tops are disintegrated or chipped on certain collection sites out in the woodland. The same may count for twigs and other clearing material, such as small trees and bushes, and also in the agricultural landscape, where fast growing crops such as salix, hemp etc are grown. From these places the finally divided lignocellulosic material is transported via for example truck platforms or train cars, to the torrefication plant.

If lignocellulosic material which is not finally divided reaches the torrefication plant the material has to be disintegrated on the spot (not shown in the figure). There are a large number of disintegrators and any one of these can be used.

The finally divided lignocellulosic material is collected in a storage bunker 1. From there the material is transported with the aid of a compressing and air displacing feeding device 2 to a gas tight jacketed drying device 3. The feeding device 2 can be of screw type and a plug screw is preferred. The material being introduced into the drying device 3 is practically air free, which it is desirable to avoid oxygen entering into the system.

Any jacketed drying device 3 may be used. These are often rectangular and are placed lying down. There are drying devices with different cross sections. The round form is common and is preferred in this case. Further, the drying device should be rotatable and the circumference of the inner drum should be provided with carrier means, which drive the lignocellulosic material forward under simultaneous evaporation of first of all water in vapor form. The jacket through which the heating steam at overpressure flows may be constructed in different ways. In its simplest form it consists of an outer drum placed outside an inner drum and with only a few spreaders of a certain extension between the drums, leading to an extensive free space wherein the heating steam at overpressure flows. The described jacket space can also have a large number of parallel longitudinal tubes through which the heating steam at overpressure flows. Said tubes may be placed immediately adjacent each other or could be placed on a certain distance from each other. Further the tubes may be applied in more than one layer inside the jacket. It is also possible to exclude the inner drum and let the solid material, i.e. the progressing lignocellulosic material, come into direct contact with the steam tubes.

After finished drying of the lignocellulosic material it is led further to the torrefication chamber 4 via a feeding device 5. This may be screw-formed and a plug screw is preferred. Any jacketed torrefication chamber may be used. What has been cited above regarding the drying device 3 is completely applicable concerning the torrefication chamber 4, meaning that the two objects can be at least closely similar. Since for example a plug screw in the outlet end for the material is gastight, no gas is fed in together with the dried lignocellulosic material into the torrefication chamber 4. If per chance trace amounts of gas would be enclosed into the torrefication chamber 4 that gas would mainly be steam, which medium in no way is harmful for the torrefication process as such. In other words neither air nor oxygen has access to the torrefication chamber 4.

The torreficated lignocellulosic material is output gastight from the torrefication chamber 4 and is led via a feeding device 6 to a cooling device 7. Instead of using a separate feeding device 6 and a separate cooling device 7 only one device may be used in the form of a jacketed cooling screw. In that case the torrefication chamber has an opening in the right end cover, facing into the material receiving part of the cooling screw. This means that it is the right end of the cooling screw, that is where the cooled torreficated material is output from the system, which is sealing from gas both inwards into the cooling screw and to a reducing degree in the direction towards and comprising the opening of the torrefication chamber in the right end cover and outside towards the surrounding atmosphere. In the figure is schematically shown with reference to the cooling device 7 how the cooling of the material takes place. From the cooling device 7 runs a conduit 8 to a heat exchanger 9 and from that runs a conduit 10. Through this conduit 10 flows a temperature stable cooling medium, for example an oil, and the oil indirectly meets the warm torreficated material and cools the same. At the opposite end of the cooling device 7 the oil has absorbed the energy or the heat given away by the torreficated material and the heated oil leaves the device via the conduit 8 and is introduced into the heat exchanger 9, wherein the energy or heat of the oil in turn indirectly is absorbed by combustion air having a low temperature, the temperature of which thereby is increased before the combustion air is introduced into the combustion oven 23, which will be commented on separately further down in the text. In the case that only a jacketed plug screw is used as both the feeding unit and the cooling unit, the cooling process will also take place in the above described way. In a cooling screw the cooling medium may be fed counter currently in view of the torreficated material through the jacketed centre of the screw or through the enclosing jacket or via both ways. Even if a further cooling step is shown in the figure it is quite possible according to the invention to finish the treatment process after the described cooling step and let the material be output to a collecting vessel, in which atmospheric pressure and for example room temperature prevail.

The gases evaporated at the drying of the lignocellulosic material, primarily steam, leave the drying device 3 via the conduit 11 to a condenser 12. Cooling medium in the form of hot water at a temperature of for example 45 °C, for example district heating water in return, is fed via conduit 13 to the condenser 12 and leaves the same in heated form via the conduit 14. In the condenser 12 the steam condenses to condensate water, which via the conduit 15 is fed to the collection pool 16. This minimally polluted condensate water is preferably mixed into the exhaust water, which is transferred into a water purification plant. The less volatile gases leaving the lignocellulosic material together with the water during the drying process do not let themselves be condensed in the condenser 12 but is found in the gas phase leaving the condenser 12 via the conduit 17 and are fed to a collection device 19 for gas including combustion air (see conduit 18). This combustion air with a small content of combustible organic gases are fed via conduits 20, 21 and 22 to the combustion oven 23.

The reactor gas formed during the partial degradation (or conversion) of the dry lignocellulosic material during the torrefication is fed via conduit 24 to the oven 23 for combustion. The resulting very energy rich flue gases are fed via conduit 25 to the heat exchanger 26 which energy of the flue gases are transferred indirectly to hot water, for example district heating water. The flue gases emptied of the main part of their energy content are fed via the conduit 27 to the funnel 28.

The heating steam at overpressure obtained from the energy output place is via the conduit 29 fed to the jacket of the torrefication chamber 4. After produced torrefication work (indirect heating of the material) the heating steam, which still is at overpressure, is fed via conduits 30 and 31 to the jacket of the drying device 3. The heating medium leaves the jacket of the drying device 3 either as steam at almost no pressure or as condensate water through conduit 32. From the steam conduit 30 runs a bypass conduit 33, through which steam at overpressure flows to a heat exchanger 34. The energy content of the steam is transferred indirectly to hot water, for example district heating water, in the heat exchanger 34, which after passage through the conduit 35, the heat exchanger 26 and the conduit 36 are removed from the system and possibly to final users, i.e. district heating customers. The heating steam worn out in the heat exchanger 34 is fed as condensate water via the conduit 37 to the conduit 32.

If one wishes to further cool the torreficated lignocellulosic material cooled in one step it can with any known transport means 38 be transferred to a heat exchanger 39, wherein the cooling medium is atmospheric air 40, which is fed to the heat exchanger 39 and leaves the heat exchanger 39 in heated form and is fed via the conduit 40 to the conduit 20, where this heated air is mixed into the existing combustion air. The ready-cooled torreficated lignocellulosic material leaves the system as final product via a feeding out device 41. The material will thereafter normally be disintegrated, for example grinded, so that a fine grained material is obtained with the grains of uniform size and appearance, which with advantage can be sacked or packed in larger wrappings or be stored in loose form etc, awaiting the final use.

Normally no support fuel to the combustion oven 23 is necessary, but this can be added via the conduit 42. It is also possible to feed a very limited stream of the ready torreficated material via the feeding device 43 to the combustion oven 23.

## Claims

1. A method for the manufacture of torreficated lignocellulosic material, comprising feeding of a finely divided lignocellulosic material with the aid of a compressing and air displacing feeding device to a gastight jacketed drying device, wherein at least the main part of water contained in the lignocellulosic material is evaporated and removed from the device as vapor, caused by a temperature inside the drying device of at least 100 °C, and after drying, that is to say evaporation of water, feeding the lignocellulosic material under gastight conditions into one at least substantially oxygen free jacketed torrefication chamber, wherein the lignocellulosic material under the influence of a temperature within the interval of 200-320 °C, suitably 270-300 *°*C*,* is converted into torreficated lignocellulosic material under simultaneous escape of combustible organic gases, whereupon the torreficated lignocellulosic material at about treatment temperature and in the absence of penetrating gases is fed to a cooling device, wherein the temperature of the torreficated lignocellulosic material is reduced to at least 100 °C, suitably at least 150 *°*C, whereupon the torreficated lignocellulosic material is exhausted from the cooling device in order to, after a possible further cooling, be recovered at atmospheric pressure and surrounding temperature, and comprising that escaped combustible organic gases are transported from inside the jacketed torrefication chamber to an oven, where they are combusted under generation of flue gases rich in energy, **characterized in that** as an external energy carrier for the method is used steam at overpressure, which is introduced into the jacket of the torrefication chamber at a temperature exceeding the torrefication temperature and which is brought to pass through the jacket and to leave the jacketed torrefication chamber at a temperature below the torrefication temperature for further transport into the jacket of the drying device and passage through that jacket while emitting the necessary energy for evaporation of water from newly added lignocellulosic material, leading to that this medium leaves the jacket of the drying device intact as steam of comparatively low temperature or leaves the jacket in condensed form, that is to say as water, having a temperature of 100 °C or slightly below, which water is collected.

2. A method according to claim 1, **characterized in that** the energy content of the flue gases are transferred indirectly using heat exchange only to circulating hot water, for example district heating water, after which the flue gases are let out through a funnel.

3. A method according to claim 1, **characterized in that** the energy content of the flue gases are transferred indirectly through heat exchange, in a first step to the passing steam at overpressure, and thereafter to the circulating hot water, for example district heating water, after which the flue gases are let out through a funnel.

4. A method according to claim 3, **characterized in that** a part of the flue gases on their way to a first heat exchanger are diverted around that and are introduced into the flue gas stream into a second heat exchanger.

5. A method according to claim 1, **characterized in that** gases evaporated from the lignocellulosic material during the drying process, mainly water vapor, are fed to a condenser, wherein the cooling medium is comprised of circulating hot water, for example district heating water, for the formation of condensate water at a temperature slightly exceeding the temperature of the circulating hot water, which condensate water is transported to a collection place.

6. A method according to claim 5, **characterized in that** gases of organic origin, which do not condensate simultaneously with the water vapor, are fed from the condenser and are mixed with atmospheric air, which mixture with a principle content of atmospheric air after indirect heat exchange are transported to the oven for serving as combustion air.

7. A method according to claim 1, **characterized in that** the cooling of the torreficated lignocellulosic material takes place in a device of the type jacketed cooling screw with compression wherein a cooling medium is transported counter currently to the advancing and in an increasing degree compressed torreficated lignocellulosic material through an outer jacket and/or through an inner jacket in the centre of the cooling screw.

8. A method according to claim 7, **characterized in that** the cooling medium after the cooling work leaves the cooling screw and is fed to a heat exchanger wherein the energy absorbed from the cooling medium is indirectly transferred to the above mentioned combustion air, which is led to the oven, whereupon the cooling medium at its output temperature is returned and introduced into the cooling screw at the end where the cooled torreficated lignocellulosic material is feeded out.

9. A method according to claims 1, 7 and 8, **characterized in that** the cooled torreficated lignocellulosic material is exposed to further cooling with atmospheric air through indirect heat exchange and **in that** the heated atmospheric air is mixed into the combustion air that is supplied to the oven.

10. A method according to claim 1, **characterized in that** the energy output place is a steam boiler.

11. An apparatus for the manufacture of torreficated lignocellulosic material comprising a compressing and air displacing device (2) with the aid of which finely divided lignocellulosic material is fed to a gastight jacketed drying device (3) through which jacket heating steam is flowing counter currently to the lignocellulosic material and having an exhaust conduit (11) arranged inside the drying device (3) through which gases driven out of the lignocellulosic material, mainly water vapor, flow, in the transport direction of the lignocellulosic material followed by a jacketed torrefication chamber (4), which is gastight at least vis-à-vis the drying device (3) which chamber (4) has on one hand an inlet conduit (29) arranged at the jacket for external heating steam at overpressure and an outlet conduit (30) arranged at the jacket for heating steam at reduced overpressure, the end (31) of which being arranged in the jacket of the drying device (3) and on the other hand a conduit (24) arranged inside the chamber (4) through which organic gases are driven out of the lignocellulosic material, that is to say reactor gas, flow and the opposite end of said conduit (24) being arranged in or adjacent to a combustion oven (23) provided with a conduit (22) for combustion air, followed by, in the transport direction of the torreficated lignocellulosic material, a cooling device (7), which is openly or gastight connected to the torrefication chamber (4), from which cooling device (7) the torreficated and cooled lignocellulosic material is feeded out to atmospheric pressure and surrounding temperature, **characterized in that** the inlet conduit (29) for the external heating steam at overpressure in the opposite end is connected to an energy output device and **in that** at the end of the system for the heating steam, that is to say in the jacket of the drying device (3), at the end of the drying device where newly supplied lignocellulosic material is fed in, is arranged a conduit (32) through which flows either steam which mainly has no pressure or condensed water vapor in the form of condensate water.

12. An apparatus according to claim 11, **characterized in that** the exhaust conduit (11) running from the drying device (3) and comprising gases driven out during the drying, mainly water vapor, is connected to a condenser (12), from which besides the inlet (13) and outlet (14) conduits for the cooling medium for the condenser, runs two conduits, one main conduit (15) for the transport of condensate water to a collecting vessel (16) and a side conduit (17) through which not condensed organic gases flow and are fed to a combustion air inlet device (19).

13. An apparatus according to claim 12, **characterized in that** a conduit (20, 21, 22) connected to the combustion oven (23) runs from said combustion air inlet device (19), which conduit (21) on its way passes through a heat exchanger (9) wherein heat is absorbed by the combustion air and the heat is emitted indirectly by the heated cooling medium, which is led in a conduit circuit (8, 10) through said heat exchanger (9) and the cooling device (7).

14. An apparatus according to claim 11, **characterized in that** the steam conduit (30, 31) running from the jacketed torrefication chamber (4) to the jacketed drying device (3) has a branch conduit (33), passing through a heat exchanger (34) in which the energy content of the steam is indirectly transferred to the circulating hot water, for example district heating water, the end (37) of said branch conduit being connected to the exhaust conduit (32) from the jacketed drying device (3).

15. An apparatus according to claim 11, **characterized in that** after the first cooling device (7) is arranged a second cooling device in the form of a heat exchanger (39), wherein the cooling medium is atmospheric air, which indirectly absorbs heat from the torreficated lignocellulosic material cooled in one step, which heated air flows through a conduit (40) being connected to the above mentioned combustion air conduit (20).

## Patentansprüche

1. Verfahren zur Herstellung gedarrten Lignozellulosematerials, umfassend das Zuführen fein zerkleinerten Lignozellulosematerials in eine gasdichte, ummantelte Trocknungseinheit mit Hilfe einer komprimierenden und luftverdrängenden Zufuhreinheit, wobei mindestens der größte Teil des im Lignozellulosematerial enthaltenen Wassers von der Einheit verdampft und als Dampf entfernt wird, was durch eine Temperatur im Inneren der Trocknungseinheit von mindestens 100°C bewirkt wird, und nach dem Trocknen, das heißt dem Verdampfen von Wasser, Zuführen des Lignozellulosematerials unter gasdichten Bedingungen in eine mindestens im Wesentlichen sauerstofffreie, ummantelte Darrkammer, wobei das Lignozellulosematerial unter dem Einfluss einer Temperatur im Bereich von 200 bis 320 *°*C*,* geeigneterweise von 270 bis 300 °C, bei gleichzeitigem Entweichen brennbarer organischer Gase in gedarrtes Lignozellulosematerial umgewandelt wird, worauf das gedarrte Lignozellulosematerial mit etwa Behandlungstemperatur und ohne eindringende Gase in eine Kühlungseinheit geführt wird, wobei die Temperatur des gedarrten Lignozellulosematerials auf mindestens 100 °C reduziert wird, geeigneterweise mindestens 150 °C, worauf das gedarrte Lignozellulosematerial aus der Kühlungseinheit entnommen wird, um nach einem möglichen weiteren Kühlen bei Umgebungsdruck und Umgebungstemperatur zurückgewonnen zu werden, und umfassend, dass entwichene brennbare organische Gase aus dem Inneren der ummantelten Darrkammer zu einem Ofen transportiert werden, in dem sie unter Erzeugung energiereicher Rauchgase verbrannt werden, **dadurch gekennzeichnet, dass** als externer Energieträger für das Verfahren Dampf mit Überdruck verwendet wird, der mit einer Temperatur, welche die Darrtemperatur übersteigt, in die Ummantelung der Darrkammer eingeführt wird und der dazu gebracht wird, durch die Ummantelung zu strömen und die ummantelte Darrkammer mit einer Temperatur unter der Darrtemperatur zu verlassen, um ferner in die Ummantelung der Trocknungseinheit transportiert zu werden und durch diese Ummantelung zu strömen, während er die zum Verdampfen des Wassers aus neu zugesetztem Lignozellulosematerial notwendige Energie abgibt, was dazu führt, dass dieses Medium die Ummantelung der Trocknungseinheit intakt als Dampf mit vergleichsweise geringer Temperatur verlässt oder die Ummantelung in kondensierter Form verlässt, das heißt als Wasser, mit einer Temperatur von 100 °C oder etwas darunter, wobei das Wasser aufgefangen wird.

2. Verfahren nach Anspruch 1, **dadurch gekennzeichnet, dass** der Energiegehalt der Rauchgase indirekt durch Wärmeaustausch nur auf zirkulierendes Heißwasser übertragen wird, zum Beispiel auf Fernwärme-Heizwasser, wonach die Rauchgase durch einen Abzug abgelassen werden.

3. Verfahren nach Anspruch 1, **dadurch gekennzeichnet, dass** der Energiegehalt der Rauchgase indirekt durch Wärmeaustausch in einem ersten Schritt auf den mit Überdruck durchströmenden Dampf und danach auf das zirkulierende Heißwasser übertragen wird, zum Beispiel auf Fernwärme-Heizwasser, wonach die Rauchgase durch einen Abzug abgelassen werden.

4. Verfahren nach Anspruch 3, **dadurch gekennzeichnet, dass** ein Teil der Rauchgase auf ihrem Weg zu einem ersten Wärmetauscher um diesen herum geführt und in den Rauchgasstrom in einen zweiten Wärmetauscher eingeführt wird.

5. Verfahren nach Anspruch 1, **dadurch gekennzeichnet, dass** die während des Trocknungsprozesses des Lignozellulosematerials verdampften Gase, hauptsächlich Wasserdampf, zu einem Kondensator geführt werden, wobei das Kühlmedium aus zirkulierendem Heißwasser besteht, zum Beispiel Fernwärme-Heizwasser, um bei einer Temperatur etwas über der Temperatur des zirkulierenden Heißwassers Kondenswasser zu bilden, das zu einer Auffangstelle transportiert wird.

6. Verfahren nach Anspruch 5, **dadurch gekennzeichnet, dass** Gase organischen Ursprungs, die nicht gleichzeitig mit dem Wasserdampf kondensieren, von dem Kondensator abgeführt und mit Umgebungsluft gemischt werden, wobei die Mischung mit einem Hauptanteil an Umgebungsluft nach dem indirekten Wärmeaustausch zu einem Ofen transportiert wird, um als Verbrennungsluft zu dienen.

7. Verfahren nach Anspruch 1, **dadurch gekennzeichnet, dass** das Kühlen des gedarrten Lignozellulosematerials in einer Einheit von der Art einer ummantelten Kühlschnecke mit Kompression stattfindet, wobei durch eine Außenummantelung und/oder eine Innenummantelung in der Mitte der Kühlschnecke ein Kühlmedium im Gegenstrom zum vorrückenden und zunehmend komprimierten gedarrten Lignozellulosematerial transportiert wird.

8. Verfahren nach Anspruch 7, **dadurch gekennzeichnet, dass** das Kühlmedium nach dem Kühlen die Kühlschnecke verlässt und in einen Wärmetauscher geführt wird, wo die aus dem Kühlmedium absorbierte Energie indirekt auf die oben genannte Verbrennungsluft übertragen wird, die zum Ofen geführt wird, wonach das Kühlmedium mit seiner Ausgabetemperatur zurückgeführt und an dem Ende, an dem das gekühlte gedarrte Lignozellulosematerial ausgeführt wird, in die Kühlschnecke eingeführt wird.

9. Verfahren nach Anspruch 1, 7 und 8, **dadurch gekennzeichnet, dass** das gekühlte gedarrte Lignozellulosematerial einer weiteren Kühlung durch indirekten Wärmetausch mit Umgebungsluft ausgesetzt wird und dass die erwärmte Umgebungsluft in die Verbrennungsluft gemischt wird, die dem Ofen zugeführt wird.

10. Verfahren nach Anspruch 1, **dadurch gekennzeichnet, dass** die Energieausgabestelle ein Dampfkessel ist.

11. Vorrichtung zur Herstellung gedarrten Lignozellulosematerials, eine Kompressions- und Luftverdrängungseinheit (2) umfassend, mit deren Hilfe fein zerkleinertes Lignozellulosematerial in eine gasdichte, ummantelte Trocknungseinheit (3) geführt wird, durch welche Ummantelungsheizdampf im Gegenstrom zum Lignozellulosematerial strömt, und die eine Abgasleitung (11) aufweist, die im Inneren der Trocknungseinheit (3) angeordnet ist, durch welche Gase, die aus dem Lignozellulosematerial getrieben werden, hauptsächlich Wasserdampf, in Transportrichtung des Lignozellulosematerials strömen, gefolgt von einer ummantelten Darrkammer (4), die mindestens gegenüber der Trocknungseinheit (3) gasdicht ist, wobei die Kammer (4) einerseits eine Einlassleitung (29) aufweist, die an der Ummantelung für externen Heizdampf mit Überdruck angeordnet ist, und eine Auslassleitung (30), die an der Ummantelung für Heizdampf mit verringertem Überdruck angeordnet ist und deren Ende (31) in der Ummantelung der Trocknungseinheit (3) angeordnet ist, und andererseits eine Leitung (24), die im Inneren der Kammer (4) angeordnet ist und durch welche organische Gase, die aus dem Lignozellulosematerial getrieben werden, das heißt Reaktorgase, strömen, wobei das gegenüberliegende Ende der Leitung (24) in oder angrenzend an einen Verbrennungsofen (23) angeordnet ist, der mit einer Leitung (22) für Verbrennungsluft ausgestattet ist, in Transportrichtung des gedarrten Lignozellulosematerials gefolgt von einer Kühlungseinheit (7), die offen oder gasdicht mit der Darrkammer (4) verbunden ist, wobei das gedarrte und gekühlte Lignozellulosematerial bei Umgebungsdruck und Umgebungstemperatur aus der Kühlungseinheit (7) abgeführt wird,
**dadurch gekennzeichnet, dass** die Einlassleitung (29) für externen Heizdampf mit Überdruck am gegenüberliegenden Ende mit einer Energieausgabeeinheit verbunden ist, und dadurch, dass am Ende des Heizdampfsystems, das heißt in der Ummantelung der Trocknungseinheit (3), am Ende der Trocknungseinheit, an dem neu zugeführtes Lignozellulosematerial eingeführt wird, eine Leitung (32) angeordnet ist, durch welche entweder Dampf strömt, der im Wesentlichen keinen Druck aufweist, oder kondensierter Wasserdampf in Form von Kondenswasser.

12. Vorrichtung nach Anspruch 11, **dadurch gekennzeichnet, dass** die Abgasleitung (11), die von der Trocknungseinheit (3) aus verläuft und Gase umfasst, die während des Trocknens ausgetrieben werden, hauptsächlich Wasserdampf, mit einem Kondensator (12) verbunden ist, von dem aus neben der Einlass- (13) und der Auslassleitung (14) für das Kühlmedium des Kondensators zwei Leitungen verlaufen, eine Hauptleitung (15) für den Transport von Kondenswasser zu einem Auffangkessel (16) und eine Nebenleitung (17), durch die nicht kondensierte organische Gase strömen und zu einer Verbrennungsluft-Einlasseinheit (19) geführt werden.

13. Vorrichtung nach Anspruch 12, **dadurch gekennzeichnet, dass** eine Leitung (20, 21, 22), die mit dem Verbrennungsofen (23) verbunden ist, von der Verbrennungsluft-Einlasseinheit (19) aus verläuft, wobei die Leitung (21) auf ihrem Weg einen Wärmetauscher (9) durchquert, in dem von der Verbrennungsluft Wärme absorbiert wird und die Wärme indirekt durch das erwärmte Kühlmedium ausgestrahlt wird, das in einem Leitungskreis (8, 10) durch den Wärmetauscher (9) und die Kühlvorrichtung (7) geführt wird.

14. Vorrichtung nach Anspruch 11, **dadurch gekennzeichnet, dass** die Dampfleitung (30, 31), die von der ummantelten Darrkammer (4) aus zur ummantelten Trocknungseinheit (3) verläuft, eine Abzweigleitung (33) aufweist, die einen Wärmetauscher (34) durchquert, in dem der Energiegehalt des Dampfes indirekt auf das zirkulierende Heißwasser übertragen wird, zum Beispiel Fernwärme-Heizwasser, wobei das Ende (37) der Abzweigleitung mit der Abgasleitung (32) von der ummantelten Trocknungseinheit (3) verbunden ist.

15. Vorrichtung nach Anspruch 11, **dadurch gekennzeichnet, dass** hinter der ersten Kühleinheit (7) eine zweite Kühleinheit in Form eines Wärmetauschers (39) angeordnet ist, wobei das Kühlmedium Umgebungsluft ist, die indirekt Wärme aus dem gedarrten Lignozellulosematerial absorbiert, das in einem Schritt gekühlt wurde, wobei die erwärmte Luft durch eine Leitung (40) strömt, die mit der oben genannten Verbrennungsluftleitung (20) verbunden ist.

## Revendications

1. Procédé de fabrication de matériau lignocellulosique torréfié, comportant les étapes consistant à introduire un matériau lignocellulosique finement divisé à l'aide d'un dispositif d'alimentation à compression et déplacement par air dans un dispositif de séchage chemisé étanche aux gaz, au moins la majeure partie de l'eau contenue dans le matériau lignocellulosique étant évaporée et évacuée du dispositif sous forme de vapeur, sous l'effet d'une température à l'intérieur du dispositif de séchage d'au moins 100°C et, après séchage, c'est-à-dire évaporation de l'eau, à amener le matériau lignocellulosique dans des conditions d'étanchéité aux gaz dans un au moins sensiblement dépourvu d'oxygène chambre de torréfaction chemisée, le matériau lignocellulosique, sous l'influence d'une température située dans l'intervalle de 200 à 320°C, de façon appropriée entre 270 et 300°C, étant converti en matériau lignocellulosique torréfié sous échappement simultané de gaz organiques combustibles, le matériau lignocellulosique torréfié approximativement à la température de traitement et en l'absence de gaz pénétrants, étant ensuite introduit dans un dispositif de refroidissement, la température du matériau lignocellulosique torréfié étant réduite à au moins 100°C, de façon appropriée au moins 150°C, le matériau lignocellulosique torréfié étant ensuite évacué du dispositif de refroidissement afin, après un possible refroidissement supplémentaire, d'être récupéré à pression atmosphérique et température ambiante, et comportant une étape ou des gaz organiques combustibles échappés sont transportés de l'intérieur de la chambre de torréfaction chemisée à un four, où ils sont brûlés avec génération de gaz de combustion riche en énergie, **caractérisé par** l'utilisation, en tant que vecteur extérieur d'énergie pour le procédé, de vapeur en surpression qui est introduite dans la chemise de la chambre de torréfaction à une température dépassant la température de torréfaction et qui est amenée à passer à travers la chemise et à quitter la chambre de torréfaction chemisée à une température inférieure à la température de torréfaction pour être ensuite transportée jusque dans la chemise du dispositif de séchage et passer à travers ladite chemise tout en émettant l'énergie nécessaire à l'évaporation de l'eau à partir de matériau lignocellulosique nouvellement ajouté, ce qui a pour conséquence que ledit milieu quitte la chemise du dispositif de séchage intact sous forme de vapeur à température relativement basse ou quitte la chemise sous forme condensée, c'est-à-dire sous forme d'eau, présentant une température de 100°C ou légèrement inférieure, ladite eau étant recueillie.

2. Procédé selon la revendication 1, **caractérisé en ce que** le contenu énergétique des gaz de combustion est transféré indirectement en utilisant uniquement un échange de chaleur vers de l'eau chaude en circulation, par exemple de l'eau de chauffage urbain, après quoi les gaz de combustion sont libérés à travers une cheminée.

3. Procédé selon la revendication 1, **caractérisé en ce que** le contenu énergétique des gaz de combustion est transféré indirectement par échange de chaleur, dans une première étape vers la vapeur en surpression s'écoulant, puis à l'eau chaude en circulation, par exemple l'eau de chauffage urbain, après quoi les gaz de combustion sont libérés à travers une cheminée.

4. Procédé selon la revendication 3, **caractérisé en ce qu'**une partie des gaz de combustion se dirigeant vers un premier échangeur de chaleur est déviée de façon à contourner celui-ci et est introduite dans le flux de gaz de combustion dans un deuxième échangeur de chaleur.

5. Procédé selon la revendication 1, **caractérisé en ce que** des gaz évaporés à partir du matériau lignocellulosique au cours du processus de séchage, principalement de la vapeur d'eau, sont introduits dans un condenseur, le milieu de refroidissement étant constitué de l'eau chaude en circulation, par exemple l'eau de chauffage urbain, pour la formation d'eau de condensation à une température dépassant légèrement la température de l'eau chaude en circulation, ladite eau de condensation étant transportée jusqu'à un lieu de collecte.

6. Procédé selon la revendication 5, **caractérisé en ce que** des gaz d'origine organique, qui ne se condensent pas simultanément avec la vapeur d'eau, sont extraits du condenseur et sont mélangés à de l'air atmosphérique, ledit mélange contenant principalement de l'air atmosphérique après échange indirect de chaleur étant transporté jusqu'au four pour servir d'air de combustion.

7. Procédé selon la revendication 1, **caractérisé en ce que** le refroidissement du matériau lignocellulosique torréfié a lieu dans un dispositif du type hélice chemisée de refroidissement avec compression, un milieu de refroidissement étant transporté à contre-courant du matériau lignocellulosique torréfié avançant et de plus en plus comprimé à travers une chemise extérieure et / ou à travers une chemise intérieure au centre de l'hélice de refroidissement.

8. Procédé selon la revendication 7, **caractérisé en ce que** le milieu de refroidissement, après le travail de refroidissement, quitte l'hélice de refroidissement et est introduit dans un échangeur de chaleur l'énergie absorbée à partir du milieu de refroidissement étant indirectement transférée à l'air de combustion susmentionné, qui est amené jusqu'au four, le milieu de refroidissement à sa température de sortie étant alors renvoyé et introduit dans l'hélice de refroidissement à l'extrémité où le matériau lignocellulosique torréfié refroidi est extrait.

9. Procédé selon les revendications 7 ou 8, **caractérisé en ce que** le matériau lignocellulosique torréfié refroidi est exposé à un refroidissement supplémentaire à l'aide d'air atmosphérique par échange indirect de chaleur et **en ce que** l'air atmosphérique chauffé est incorporé à l'air de combustion qui est fourni au four.

10. Procédé selon la revendication 1, **caractérisé en ce que** le lieu de sortie d'énergie est une chaudière à vapeur.

11. Appareil de fabrication de matériau lignocellulosique torréfié, comportant un dispositif (2) de compression et de déplacement par air à l'aide duquel du matériau lignocellulosique finement divisé est introduit dans un dispositif (3) de séchage chemisé étanche aux gaz à travers lequel de la vapeur de chauffage de chemise circule à contre-courant du matériau lignocellulosique et comprenant un conduit (11) d'évacuation disposé à l'intérieur du dispositif (3) de séchage à travers lequel s'écoulent des gaz chassés du matériau lignocellulosique, principalement de la vapeur d'eau, dans la direction de transport du matériau lignocellulosique, suivi d'une chambre (4) de torréfaction chemisée, qui est étanche aux gaz au moins vis-à-vis du dispositif (3) de séchage ladite chambre (4) comprenant d'une part un conduit (29) d'entrée disposé au niveau de la chemise pour une vapeur externe de chauffage en surpression et un conduit (30) de sortie disposé au niveau de la chemise pour une vapeur de chauffage en surpression réduite, dont l'extrémité (31) est disposée dans la chemise du dispositif (3) de séchage et d'autre part un conduit (24) disposé à l'intérieur de la chambre (4) à travers lequel s'écoulent des gaz organiques chassés du matériau lignocellulosique, c'est-à-dire un gaz de réacteur, et l'extrémité opposée dudit conduit (24) étant disposée dans ou au voisinage d'un four (23) de combustion muni d'un conduit (22) d'air de combustion, suivi, dans la direction de transport du matériau lignocellulosique torréfié, d'un dispositif (7) de refroidissement, qui est relié de façon ouverte ou étanche aux gaz à la chambre (4) de torréfaction, le matériau lignocellulosique torréfié et refroidi étant extrait dudit dispositif (7) de refroidissement à pression atmosphérique et à température ambiante, **caractérisé en ce que** le conduit (29) d'entrée destiné à la vapeur externe de chauffage en surpression dans l'extrémité opposée est relié à un dispositif de sortie d'énergie et **en ce qu'**à l'extrémité du système pour vapeur de chauffage, c'est-à-dire dans la chemise du dispositif (3) de séchage, à l'extrémité du dispositif de séchage où est introduit du matériau lignocellulosique nouvellement fourni, est disposé un conduit (32) à travers lequel s'écoule soit de la vapeur qui n'est essentiellement pas sous pression ou de la vapeur d'eau condensée sous forme d'eau de condensation.

12. Appareil selon la revendication 11, **caractérisé en ce que** le conduit (11) d'évacuation partant du dispositif (3) de séchage et comportant des gaz chassés pendant le séchage, principalement de la vapeur d'eau, est relié à un condenseur (12) d'où partent, outre les conduits d'entrée (13) et de sortie (14) du milieu de refroidissement destiné au condenseur, deux conduits, un conduit principal (15) servant au transport de l'eau de condensation jusqu'à un récipient (16) de collecte et un conduit latéral (17) à travers lequel des gaz organiques non condensés flow et sont introduit dans un dispositif (19) d'entrée d'air de combustion.

13. Appareil selon la revendication 12, **caractérisé en ce qu'**un conduit (20, 21, 22) relié au four (23) de combustion part dudit dispositif (19) d'entrée d'air de combustion, ledit conduit (21) passant sur son parcours à travers un échangeur (9) de chaleur où de la chaleur est absorbée par l'air de combustion et où la chaleur est émise indirectement par le milieu de refroidissement chauffé, qui est acheminé dans un circuit de conduits (8, 10) à travers ledit échangeur (9) de chaleur et le dispositif (7) de refroidissement.

14. Appareil selon la revendication 11, **caractérisé en ce que** le conduit (30, 31) de vapeur allant de la chambre (4) de torréfaction chemisée au dispositif (3) de séchage chemisé comporte un conduit auxiliaire (33) passant à travers un échangeur (34) de chaleur dans lequel le contenu énergétique de la vapeur est indirectement transféré à l'eau chaude en circulation, par exemple l'eau de chauffage urbain, l'extrémité (37) dudit conduit auxiliaire étant reliée au conduit (32) d'évacuation provenant du dispositif (3) de séchage chemisé.

15. Appareil selon la revendication 11, **caractérisé en ce qu'**après le premier dispositif (7) de refroidissement est disposé un deuxième dispositif de refroidissement sous la forme d'un échangeur de chaleur (39), le milieu de refroidissement étant de l'air atmosphérique qui absorbe indirectement de la chaleur en provenance du matériau lignocellulosique torréfié refroidi en une seule étape, ledit air chauffé s'écoulant à travers un conduit (40) relié au conduit (20) d'air de combustion susmentionné.
